(19) Europäisches Patentamt
European Patent Office
Office européen des brevets

(11) Veröffentlichungsnummer: **0 396 935 A2**

(12) # EUROPÄISCHE PATENTANMELDUNG

(21) Anmeldenummer: **90107141.5**

(22) Anmeldetag: **13.04.90**

(51) Int. Cl.5: **C08L 81/02, C08L 79/08, C08K 5/3445, C08K 9/04, C08K 3/40**

(30) Priorität: **27.04.89 DE 3913858**
**11.05.89 DE 3915425**

(43) Veröffentlichungstag der Anmeldung:
**14.11.90 Patentblatt 90/46**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Burkhard, Dr.**
**Mündelheimer Strasse 94**
**D-4150 Krefeld 11(DE)**
Erfinder: **Cramer, Wilfried, Dr.**
**Roonstrasse 56**
**D-4150 Krefeld(DE)**
Erfinder: **Traenckner, Hans-Joachim, Dr.**
**Leiebos 31, Bus 00111**
**B-2060 Merksem(BE)**
Erfinder: **Pielartzik, Harald, Dr.**
**Doerperhofstrasse 39**
**D-4150 Krefeld(DE)**
Erfinder: **Wehnert, Wolfgang, Dr.**
**Bodelschwinghstrasse 14**
**D-4150 krefeld(DE)**
Erfinder: **Bushong, William Graig, Dr.**
**MOBAY Co., Plastics Bldg. 8**
**Pittsburgh PA 15205(US)**
Erfinder: **Jakob, Wolfgang, Dipl.-Ing.**
**Am Domacker 81**
**D-4130 Moers(DE)**

(54) **Mischungen aus Polyarylensulfiden, Glasfasern und Maleinimiden.**

(57) Die Erfindung betrifft Mischungen aus Polyarylensulfiden, Maleinimiden, Glasfasern und gegebenenfalls anderen Zusätzen. Die Mischungen zeichnen sich durch gute mechanische Eigenschaften aus.

EP 0 396 935 A2

## Mischungen aus Polyarylensulfiden, Glasfasern und Maleinimiden

Die Erfindung betrifft Mischungen aus Polyarylensulfiden, Maleinimiden, Glasfasern und gegebenenfalls anderen Zusätzen. Die Mischungen zeichnen sich durch gute mechanische Eigenschaften aus.

Polyarylensulfide (PAS) sind bekannt (z.B. US-PS 3 354 129, EP 17 10 21). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bislang Duroplasten vorbehalten waren.

PPS hat mechanische Eigenschaften, die für einige Anwendungen z.B. im Spritzgußbereich unzureichend sind. Insbesondere sind Biege- oder Zugfestigkeit, Randfaserdehnung, Schlagzähigkeit und Elastizitätsmodul für die Praxis häufig nicht ausreichend. Es hat sich daher als Vorteil erwiesen, PPS z.B. durch Abmischung mit anderen Thermoplasten, z.B. mit Polycarbonaten in den genannten Eigenschaften zu verbessern (z.B. JP-A 51-59952, EP-A 104 543, US-A 4 021 596).

Für bestimmte Anwendungsgebiete ist das Eigenschaftsprofil derartiger Abmischungen jedoch nicht immer ganz befriedigend.

Es ist bekannt, daß PPS sich durch Abmischung mit Maleinimiden in seinen Eigenschaften modifizieren läßt. Meist wird dabei eine Verzweigung von PPS bewirkt, da z.B. PPS unter oxidativen Bedingungen mit Maleinimiden umgesetzt wird (JP-A 021 876) oder PPS mit Verbindungen umgesetzt wird, die mindestens drei Maleinimidgruppen und einen Triazinring enthalten (z.B. JP-A 202 162, EP-A 105 639).

Wünschenswert wäre es daher, die Eigenschaften von unverzweigtem Polyarylensulfid durch solche Additive anzuheben, die nicht vernetzend auf das Polymer einwirken.

Es wurde nun gefunden, daß Abmischungen von Polyarylensulfiden (PAS), vorzugsweise von Polyphenylensulfid (PPS) mit geringen Mengen an Maleinimiden und gegebenenfalls anderen Zusatzstoffen sich durch ihre mechanischen Eigenschaften, z.B. Zähigkeit, Biegefestigkeit, Randfaserdehnung usw. besonders auszeichnen.

Gegenstand der Erfindung sind daher Mischungen aus

A) 99,5 bis 93 Gew.-% unverzweigten, sulfongruppenfreien Polyarylensulfiden, bevorzugt PPS,

B) 0,5 bis 7 Gew.-% eines Maleinimids der Formel (I) und/oder (II), vorzugsweise der Formel (I),

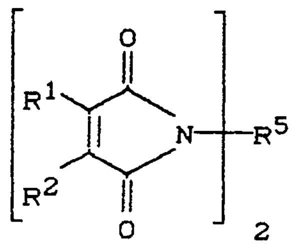

(I),

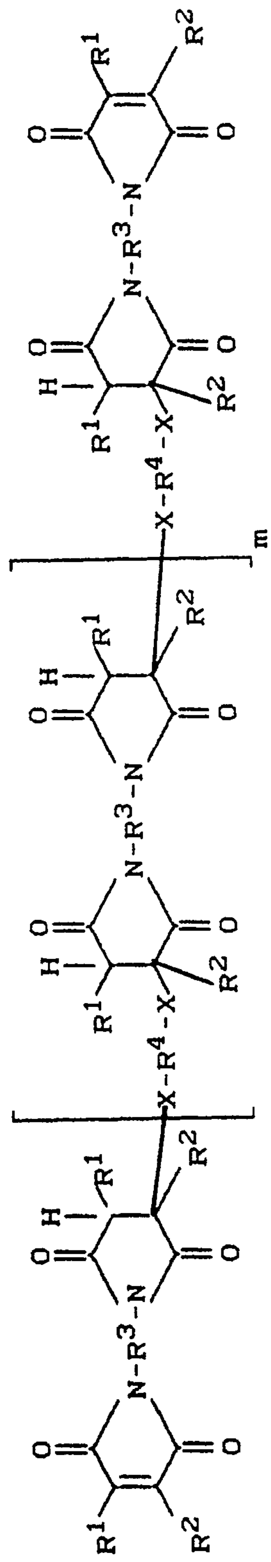

(II),

wobei

$R^1$ und $R^2$ gleich oder verschieden sein können und Wasserstoff, $C_1$-$C_{22}$-Alkyl, bevorzugt Methyl, $C_6$-$C_{14}$-Aryl, bevorzugt Phenyl oder $C_7$-$C_{22}$-Aralkyl oder $C_7$-$C_{22}$-Alkylaryl, besonders bevorzugt Wasserstoff bedeuten,

$R^3$, $R^4$ und $R^5$ unabhängig voneinander divalente Reste, mit 1 bis 38 aliphatischen C-Atomen sind, die gegebenenfalls auch in Ringen angeordnet sein können und/oder divalente aromatische Reste mit 6 bis 24-C-Atomen sind und/oder divalente aromatisch-aliphatische und/oder aliphatisch-aromatische Reste mit 7 bis

40 C-Atomen sind wobei gegebenenfalls zwei oder mehr aromatische, aliphatische Ringe durch eine chemische Bindung, eine $C_1$-$C_{10}$-Alkylenbrücke, ein Sauerstoffatom, ein Schwefelatom, eine Disulfidbrücke, eine Carbonylgruppe und/oder eine Sulfongruppe verknüpft sein können,
und
X für -NH oder $C_1$-$C_{10}$-N-Alkyl steht,
m für eine Zahl von 0 bis 1000, vorzugsweise 0 bis 10 steht
und

C) bezogen auf 100 Gew.-Teile (A + B) 10 bis 400, vorzugsweise 60 bis 200 Gewichtsteile Glasfasern, die mit Polyurethanfilmbildnern und Aminosilan-Haftvermittlern geschlichtet sind und/oder anderen mineralische Füll- und Verstärkungsstoffen und/oder anorganischen oder organischen Hilfsstoffen, wobei die Glasfasern mindestens 30 Gew.-% der Füll- und Verstärkungsstoffe ausmachen.

Beispiele für erfindungsgemäße Stoffe der Formel (I) sind 1,6-Bis-(maleinimido)-hexan, 1,4-Bis-(maleinimido)cyclohexan, 1,4-Bis-(maleinimido)-benzol, 4,4′-Bis-(maleinimido)-biphenyl, Bis-(4-maleinimidophenyl)-methan, 2,2-Bis-(4-maleinimidophenyl)-propan, 1,3-Bis-(maleinimido)-cyclohexan, 1,5-Bis-(maleinimido)-naphthalin, 1,3-Bis-(maleinimido)-benzol, Bis-(maleinimido)-methan, 1,2-Bis-(maleinimido)-ethan, Di-(4-maleinimidophenyl)sulfon, Di-(3-maleinimidophenyl)sulfon, 4,4′-Bis-(maleinimido)-benzophenon, 3,3′-Bis-(Maleinimido)-benzophenon, 4,4′-Bis-(maleinimido)-diphenylether, 4,4′-Bis-(maleinimido)-diphenylsulfid usw., 4,4′-Bis-(maleinimido)-diphenyldisulfid usw..

Beispiele für erfindungsgemäße Stoffe der Formel (II) sind oligomere oder polymere Michaeladditionsprodukte von Bis-(4-maleinimido)-methan mit Diaminen, z.B. Bis-(4-aminophenyl)methan oder Hexamethylendiamin u.s.w.

Die erfindungsgemäßen Maleinimide können aus Maleinsäureanhydrid und Amin z.B. analog GB-A 1 137 592 hergestellt werden.

Mineralische Füllstoffe oder Zusatzstoffe sind z.B. Glimmer, Microtalk, Talkum, Quarzmehl, Metalloxide und -sulfide, wie z.B. $TiO_2$, ZnO, ZnS, Graphit, Ruß, Fasern aus z.B. Quarz und Kohle, Carbonate wie $MgCO_3$, $CaCO_3$ oder Sulfate, z.B. $CaSO_4$, $BaSO_4$, Glasfasern, Glaskugeln usw.

Erfindungsgemäß können z.B. handelsübliche, gegebenenfalls auf übliche Art geschlichtete Glasfasern eingesetzt. Sie haben einen Durchmesser von 1 bis 20 µm, bevorzugt 1,5 bis 10 µm. Es können auch Endlosfasern eingesetzt werden und/oder Herstellungsverfahren gewählt werden, bei denen die Länge der Fasern in der fertigen erfindungsgemäßen Abmischung dann 0,05 bis 10, bevorzugt 0,1 bis 2 mm beträgt. Es können auch Endlosfasern (Rovings) eingesetzt werden in Verfahren zur Herstellung von endlosverstärktem Unidirektionalverbund.

Gegebenenfalls können auch anstelle der Glasfasern handelsübliche Glaskugeln eingesetzt werden, z.B. Ballotini-Glaskugeln. Diese können auch bevorzugt in Mischung mit Glasfasern als weitere mineralische Füllstoffe dienen.

Als weitere übliche Zusatzstoffe können Pigmente, Entformungsmittel, E-Wachse, Fließhilfsmittel, Nucleierungsmittel oder Stabilisatoren eingesetzt werden.

Die erfindungsgemäßen Mischungen können auf übliche Art und Weise durch Extrusion hergestellt werden.

Die erfindungsgemäßen Mischungen können auf übliche Weise zu Formteilen, Halbzeug, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

## Beispiele

Die Herstellung der erfindungsgemäßen Mischungen erfolgte auf einem Doppelwellenextruder ZSK 32 von Werner und Pfleiderer bei 320 °C.

Das verwendendete PPS wies eine Schmelzviskosität von 59 PA.s (306 °C), Schubspannung = 1.000 $s^{-1}$ auf und wurde nach EP-A 171 021 hergestellt.

Als Glasfasern wurde die mit Polyurethanfilmbildner und Aminosilan geschlichtete Schnittglasfaser Bayer CS 7916® zu 40 Gew.-% zusammen mit 0,5 Gew.-% Microtalk eingesetzt.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biege-E-Modul und Schlagzähigkeit $a_n$ (reversed notched ISO 180) untersucht.

## Vergleichsbeispiel 1

Gemischt wurden 59,5 % PPS mit den Füllstoffen.

Vergleichsbeispiel 2 (nicht erfindungsgemäß)

Gemischt wurden 58,5 % PPS und 1 % des Polycarbonats M 3.200® mit den Füllstoffen.

Vergleichsbeispiel 3 (nicht erfindungsgemäß)

Gemischt wurden 54 % PPS und 6 % Bis-(4-maleinimidophenyl)methan mit den Füllstoffen. Dieser Vergleich zeigt die geringere Wirkung bei größeren Konzentrationen an Bis-(4-maleinimidophenyl)methan.

Vergleichsbeispiel 4 (nicht erfindungsgemäß)

Gemischt wurden 59 % PPS, 1 % Bis-(4-maleinimidophenyl)methan mit 40 % der Epoxysilan-geschlichteten Glasfaser OCF 429 YZ®. Der Vergleich zeigt den Einfluß des Haftvermittlers.

Vergleichsbeispiel 5 (nicht erfindungsgemäß)

Gemischt wurden 59 % PPS, 1 Bis-(4-maleinimidophenyl)methan und 40 % der Epoxysilan-geschlichteten Glasfaser OCF R44CX®. Der Vergleich zeigt den Einfluß des Haftvermittlers.

Vergleichsbeispiel 6 (nicht erfindungsgemäß)

Gemischt wurden 59 % PPS, 1 % Bis-(4-maleinimidophenyl)methan und 40 % der Glasfaser CS 7952® mit Polypropylenfilmbildner. Der Vergleich zeigt den Einfluß des Filmbildners.

Vergleichsbeispiel 7 (nicht erfindungsgemäß)

Gemischt wurden 59 % PP1, 1 % 1,3,5-Tris-(4-maleinimidophenyl)triazintrion-2,4,6 und 40 % der Glasfaser CS 7916®. Der Vergleich zeigt die geringere Wirkung von trisfunktionellen Maleinimiden.

Beispiel 1

Gemischt wurden 59 % und 0,5 % Bis(4-maleinimidophenyl)methan mit den Füllstoffen.

Beispiel 2

Gemischt wurden 58,5 % und 1 % Bis(4-maleinimidophenyl)methan mit den Füllstoffen.

Beispiel 3

Gemischt wurden 57,5 % und 2 % Bis(4-maleinimidophenyl)methan mit den Füllstoffen.

| Beispiel | Biegefestigkeit MPa | Randfaserdehnung % | E-Modul MPa | Izod-Schlagzähigkeit kJ/m² |
|---|---|---|---|---|
| Vergl. 1 | 249 | 1,86 | 13.060 | 28,5 |
| Vergl. 2 | 284 | 2,16 | 12.970 | 38,3 |
| 1 | 307 | 2,45 | 12.490 | 45,9 |
| 2 | 314 | 2,49 | 12.660 | 49,4 |
| 3 | 318 | 2,48 | 13.470 | 49,9 |
| Vergl. 3 | 286 | 2,45 | 11.960 | 34,7 |
| Vergl. 4 | 280 | 2,16 | 12.800 | 40,5 |
| Vergl. 5 | 297 | 2,31 | 13.071 | 39,7 |
| Vergl. 6 | 224 | 1,61 | 14.032 | 23,7 |
| Vergl. 7 | 279 | 2,29 | 12.790 | 33,3 |

## Ansprüche

1. Mischungen aus
A) 99,5 bis 20 Gew.-%, unverzweigten, sulfongruppenfreien Polyarylensulfiden,
B) 0,5 bis 40 Gew.-% eines Maleinimids der Formel (I) und/oder (II)

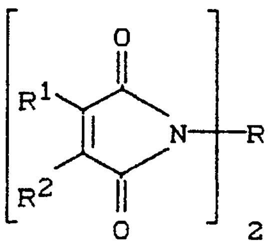

(I),

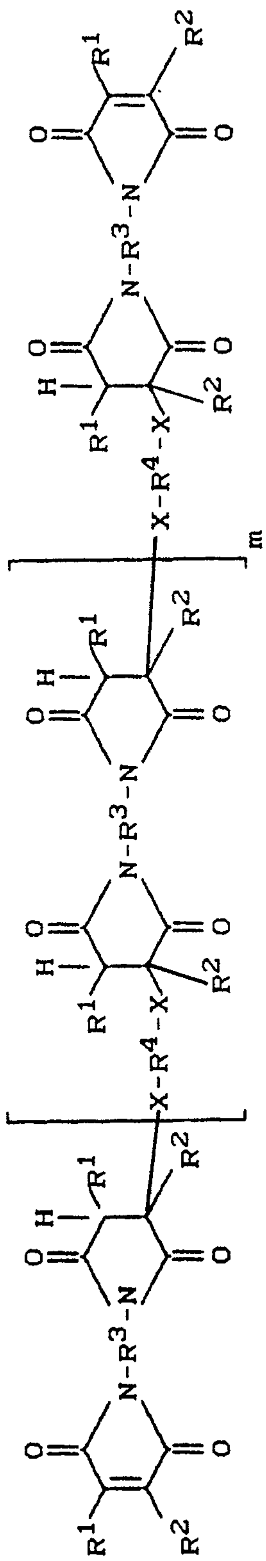

(II),

wobei

$R^1$ und $R^2$ gleich oder verschieden sein können und Wasserstoff, $C_1$-$C_{22}$-Alkyl, $C_6$-$C_{14}$-Aryl, oder $C_7$-$C_{22}$-Aralkyl oder $C_7$-$C_{22}$-Alkylaryl, bedeuten,

$R^3$, $R^4$ und $R^5$ unabhängig voneinander divalente Reste, mit 1 bis 38 aliphatischen C-Atomen sind, die gegebenenfalls auch in Ringen angeordnet sein können und/oder divalente aromatische Reste mit 6 bis 24-C-Atomen sind und/oder divalente aromatischaliphatische und/oder aliphatischaromatische Reste mit 7 bis 40C-Atomen sind, wobei gegebenenfalls zwei oder mehr aromatische, aliphatische Ringe durch eine

chemische Bindung, eine $C_1$-$C_{10}$-Alkylenbrücke, ein Sauerstoffatom, ein Schwefelatom, eine Disulfidbrücke, eine Carbonylgruppe und/oder eine Sulfongruppe verknüpft sein können,
und
X für -NH oder $C_1$-$C_{10}$-N-Alkyl steht,
m für eine Zahl von 0 bis 1000 steht
und

C) bezogen auf 100 Gew.-Teile (A + B) 10-400 Gewichtsteile Glasfasern, die mit Polyurethanfilmbildnern und Aminosilan-Haftvermittlern geschlichtet sind und/oder anderen mineralischen Füll- und Verstärkungsstoffen und/oder anorganischen oder organischen Hilfsstoffen, wobei die Glasfasern mindestens 30 Gew.-% der Füll- und Verstärkungsstoffe ausmachen.

2. Verwendung von Mischungen nach Anspruch 1 zur Herstellung geformter Körper.